# EUROPÄISCHE PATENTANMELDUNG

(11) **EP 3 657 272 A1**
(43) Veröffentlichungstag der Anmeldung: **27.05.2020**
(21) Anmeldenummer: 19207581.0
(22) Anmeldetag: 07.11.2019
(51) Int. Cl.: G05B 15/02

(54) **BEDIENGERÄT FÜR DIE HAUSAUTOMATISIERUNG**

(30) Priorität: 26.11.2018 DE 102018129687
(71) Anmelder: Insta GmbH, 58509 Lüdenscheid (DE)
(72) Erfinder: Groll, Roland, 58507 Lüdenscheid (DE); Neuhaus, Stefan, 44289 Dortmund (DE); Sangermann, Marc, 44229 Dortmund (DE); Steins, Stephan, 44149 Dortmund (DE); Donat, Matthias, 58553 Halver (DE)

(57) **Zusammenfassung**

Offenbart ist ein Bediengerät für die Hausautomatisierung mit zumindest einem manuell betätigbaren ersten Schaltsensor und zumindest einem manuell betätigbaren zweiten Schaltsensor welcher wenigstens einen ersten Schaltsensor zum Schalten einer gebäudetechnischen Installation vorgesehen ist und bei installiertem Bediengerät die elektrische Energieversorgung der gebäudetechnischen Installation schaltet.

Besonderes Kennzeichen ist der erste Schaltsensor mit seinem Schaltorgan in die elektrische Energieversorgung der zu schaltenden gebäudetechnischen Installation, wobei das Bediengerät zur Stromversorgung seiner elektrischen Verbraucher vor der von dem ersten Schaltsensor geschalteten elektrischen Energieversorgung an diese angeschlossen ist, welches Bediengerät über ein Funkmodul sowie über einen elektronischen Speicher verfügt, in dem zumindest ein Direktbefehl abgelegt ist, durch den ein in einem Gebäudeinstallationsnetzwerk eingebundener Aktor direkt ansteuerbar ist und durch welchen wenigstens einen zweiten Schaltsensor das Funkmodul zum Senden eines in dem Speicher abgelegten Direktbefehls angesteuert ist.

## Beschreibung

Die Erfindung betrifft ein Bediengerät für die Hausautomatisierung mit zumindest zwei manuell betätigbaren Schaltsensoren.

Bediengeräte mit Schaltsensorengruppen, die beispielsweise tastend, rastend oder drehend ausgelegt sein können, sind im Stand der Technik hinlänglich bekannt. Konventionelle, als Wandschalter ausgelegte Bediengeräte sind mit ihren Schaltorganen in die elektrische Energieversorgung einer gebäudetechnischen Installation, etwa einer Leuchte, eingeschaltet. Die gebäudetechnische Installation wird mittels des Schalters durch Schließen und Öffnen desselben geschaltet. Eine gebäudetechnische Installation kann anstelle der beispielhaft angesprochenen Leuchte auch jede andere elektrisch ansteuerbare Installation, wie beispielsweise eine Jalousie, eine Steckdose oder dergleichen sein. Je nach Auslegung der gebäudetechnischen Installation kann mit einem solchen Schaltsensor diese nicht nur ein- und ausgeschaltet werden, sondern auch in andere Zustände gebracht werden, wie dieses beispielsweise durch Dimmen einer Leuchte möglich ist. Beim Dimmen einer Leuchte erhält diese einen der vorgegebenen Dimmstellung entsprechenden Strom. Die Strombegrenzung erfolgt typischerweise nach einem Phasenanschnitts- oder Phasenabschnittsverfahren und somit entsprechend einem durch das Dimmen vorgegebenen Phasenwinkel.

In der Gebäudetechnik werden vielfach Hausautomatisierungssysteme eingesetzt. Ein solches Hausautomatisierungssystem umfasst ein Gebäudeinstallationsnetzwerk, über das verschiedenste, im Gebäude angeordnete Aktoren, die auch diejenigen von gebäudetechnischen Installationen sein können, organisiert sind und somit über das Gebäudeinstallationsnetzwerk angesteuert werden. Zum Ansteuern eines solchen Aktors dienen in das Gebäudeinstallationsnetzwerk eingebundene Bediengeräte. Ein Beispiel hierfür ist das Busch-free@home-System. Bei diesem zentralistisch aufgebauten Gebäudeinstallationsnetzwerk erfolgt die gesamte Kommunikation über eine Basisstation. Unter anderem sind Bediensensoren für dieses System bekannt, die in einem gemeinsamen Gehäuse mit einem Aktor angeordnet sind. Zur Bedienung des Aktors sendet der Bediensensor einen Befehl an die Basisstation, woraufhin diese einen entsprechenden Befehl an den Aktor weitergibt.

Auch ist bekannt, dass Bediengeräte in vielen Fällen mit einem berührungssensitiven Display ausgerüstet sind, sodass die Ansteuerung des jeweils gewünschten Aktors über eines dieser Bediengeräte vorgenommen werden kann. Da mit einem solchen Bediengerät eine Vielzahl von Aktoren angesteuert werden können, erfolgt die Auswahl des anzusteuernden Aktors sowie die gewünschte Einstellung über eine Menüführung. Auch wenn für eine mit der Bedienung derartiger Geräte vertraute Person die Ansteuerung des jeweils gewünschten Aktors mit einem solchen Bediengerät problemlos möglich ist, setzt dieses jedoch einen gewissen Sachverstand im Umgang mit derartigen Geräten voraus. Nicht jedermann fühlt sich in der Lage oder möchte über ein solches Bediengerät einen Aktor über das Hausautomatisierungssystem ansteuern. Mitunter besteht bei einer im Umgang mit derartigen Bediengeräten ungeübten Person auch die Befürchtung, dass etwas ungewollt "verstellt" wird.

Mitunter ist der nachträgliche Einbau eines solchen als Bedienpaneel ausgelegten Bediengerätes mit Aufwand verbunden. Es muss ein geeigneter Ort gefunden werden, an dem ein Nutzer das Hausautomatisierungssystem bedienen soll. Dann muss das Bediengerät installiert werden, wofür eine elektrische Energieversorgung nötig ist. Aufgrund von designtechnischen Anforderungen verbietet sich dabei häufig eine Aufputzmontage eines stromführenden Kabels. Daher muss zur Verlegung eines Kabels die gebäudeseitige Wand und/oder die Decke/der Boden aufgestemmt und anschließend wieder verputzt werden.

Neben den vorbeschriebenen, festinstallierten Bediengeräten sind auch batteriebetriebene Bediengeräte mit tastend ausgelegten Schaltsensoren bekannt. Da batteriebetrieben sind diese nicht auf eine Anbringung an solchen Orten beschränkt, an denen ein Stromkabel zur Stromversorgung des Bediengerätes verlegt ist. Diese können daher quasi an beliebigen Positionen in einem Raum angeordnet werden. Letztendlich handelt es sich bei diesen batteriebetriebenen Bediengeräten, die über Funk einen Befehl zum Ansteuern eines Aktors aussenden, um mobile Fernbedienungen. Da batteriebetrieben, können in einem solchen Bediengerät nur geringe Ressourcen verbaut werden, um den Energieverbrauch möglichst gering und die Betriebsdauer der Batterie möglichst lang aufrecht zu halten. Daher eignet sich ein solches Bediengerät nicht zur Integration in ein Gebäudeinstallationsnetzwerk, da von über Funk kommunizierenden Netzwerkteilnehmern eine größere Sendeleistung benötigt wird. Auch sind die Sendetelegramme aufgrund der zu übermittelnden Daten länger, sodass zum Übermitteln eines Befehls die Sendezeit entsprechend länger ist. Vorteilhaft bei derartigen Bediengeräten ist jedoch, dass diese zum Ansteuern eines ganz bestimmten Aktors eingerichtet werden können.

Ausgehend von dem vorstehend diskutierten Stand der Technik liegt der Erfindung daher die Aufgabe zugrunde, ein Bediengerät mit zumindest zwei manuellen betätigbaren Schaltsensoren vorzuschlagen, das trotz für die Einbindung in ein Gebäudeinstallationsnetzwerk eines Hausautomatisierungssystems größeren benötigten Ressourcen zur Integration in ein solches geeignet ist, das sich möglichst intuitiv bedienen lässt und sich auch für eine Nachrüstung ohne großen Installationsaufwand eignet.

Gelöst wird diese Aufgabe durch ein Bediengerät für die Hausautomatisierung mit zumindest einem manuell betätigbaren ersten Schaltsensor und zumindest einem manuell betätigbaren zweiten Schaltsensor, welche wenigstens eine erste Schaltsensor zum Schalten einer gebäudetechnischen Installation vorgesehen ist und bei installiertem Bediengerät die elektrische Energieversorgung der gebäudetechnischen Installation schaltet, wobei der erste Schaltsensor mit seinem Schaltorgan in die elektrische Energieversorgung der zu schaltenden gebäudetechnischen Installation eingeschaltet ist, wobei das Bediengerät zur Stromversorgung seiner elektrischen Verbraucher vor der von dem ersten Schaltsensor geschalteten elektrischen Energieversorgung an diese angeschlossen ist, welches Bediengerät über ein Funkmodul sowie über einen elektronischen Speicher verfügt, in dem zumindest ein Direktbefehl abgelegt ist, durch den ein in einem Gebäudeinstallationsnetzwerk eingebundener Aktor direkt ansteuerbar ist, und durch welchen wenigstens einen zweiten Schaltsensor das Funkmodul zum Senden eines in dem Speicher abgelegten Direktbefehls angesteuert ist.

Dieses Bediengerät verfügt über zumindest einen manuell betätigbaren ersten Schaltsensor und über zumindest einen manuell betätigbaren zweiten Schaltsensor. Der erste Schaltsensor dient zum konventionellen Schalten einer gebäudetechnischen Installation, beispielsweise einer Leuchte, einer Jalousie oder dergleichen und ist zu diesem Zweck in die elektrische Energieversorgung dieser gebäudetechnischen Installation mit seinem Schaltorgan eingeschaltet. Das bedeutet, dass der erste Schaltsensor das Schaltorgan unmittelbar ansteuert, sodass keine dem Bedienmodul nicht zugehörige Peripherie genutzt werden muss. Mithin kann durch diesen Schaltsensor diese gebäudetechnische Installation durch Schließen und Öffnen der Energieversorgung oder auch im Falle eines Dimmers durch Begrenzen des der gebäudetechnischen Installation zugeführten Stroms betätigt werden. Da dieser erste Schaltsensor mit seinem Schaltorgan in die elektrische Energieversorgung der zu schaltenden gebäudetechnischen Installation eingeschaltet ist, befindet sich das Bediengerät typischerweise an einer für einen Nutzer vertrauten Position innerhalb eines Raumes, so beispielsweise neben einer Tür. Das Einschalten des Schaltorgans des zumindest einen ersten Schaltsensors in die elektrische Energieversorgung der zu schaltenden gebäudetechnischen Installation wird bei diesem Bediengerät genutzt, um vor der geschalteten elektrischen Energieversorgung Strom für das Bediengerät abzuzweigen. Somit kann von der elektrischen Energieversorgung für den Betrieb des Bediengerätes elektrische Energie unabhängig von dem Schaltzustand des zumindest einen manuell betätigbaren ersten Schaltsensors gewonnen werden. Dieses gestattet die Ausrüstung des Bediengerätes mit elektrischen Stromverbrauchern, insbesondere auch solchen, die sich für einen Batteriebetrieb aufgrund höherer Leistung nicht eignen. Das Bediengerät verfügt beispielsweise als elektrischen Verbraucher über ein Funkmodul. Ferner verfügt das Bediengerät über einen elektronischen Speicher, in dem zumindest ein Befehl abgelegt ist, durch den ein in einem Gebäudeinstallationsnetzwerk eingebundener Aktor ansteuerbar ist. Dieser Befehl ist ein Direktbefehl, der bezüglich seines spezifischen Informationsgehaltes die Informationen beinhaltet, mit denen der Aktor unmittelbar angesteuert wird. Bevorzugt ist vorgesehen, dass der Direktbefehl bereits diejenige Syntax aufweist, damit der Aktor die in dem Befehl beinhaltenden Informationen interpretieren kann. Zum Auslösen des Sendens eines Befehls an einen solchen Aktor dient der zumindest eine manuell betätigbare zweite Schaltsensor. In dem Speicher können verschiedene Befehle zum Ansteuern ein und desselben Aktors mit unterschiedlichen Befehlen oder auch Befehle zum Ansteuern unterschiedlicher Aktoren abgelegt sein. Auch die Hinterlegung von Befehlsverknüpfungen in dem Speicher sind möglich. Typischerweise verfügt das Bediengerät über eine Steuereinheit, die durchaus Teil des Funkmoduls sein kann, mit der unterschiedliche Betätigungen - Betätigungsevents - des zumindest einen zweiten Schaltsensors erkannt werden können. Typischerweise sind mehrere zweite Schaltsensoren vorgesehen, die eine zweite Schaltsensorengruppe bilden. Die Schaltsensoren sind typischerweise tastend ausgelegt. Sodann ist die Steuereinheit in der Lage, unterschiedliche Tastevents zu erkennen, beispielsweise eine Kurzdruck-Betätigung, eine Langdruck-Betätigung oder auch Kombinationen, wie beispielsweise eine mehrfache Kurzzeitbetätigung. Sind mehrere Schaltsensoren bei der zweiten Schaltsensorengruppe vorgesehen, beispielsweise zwei, ist die Steuereinheit in der Lage, auch kombinierte Betätigungen der Schaltsensoren zu detektieren, beispielsweise das gleichzeitige Betätigen der beiden Schaltsensoren. Jedem Betätigungsevent ist ein in dem Speicher abgelegter Befehl, bei dem es sich durchaus auch um eine Befehlskette handeln kann, zugeordnet.

Bei dem Schaltorgan des zumindest einen manuell betätigbaren ersten Schaltsensors kann es sich um das unmittelbar betätigte Schaltorgan handeln oder auch um einen Auslöser, durch den ein Relais zum eigentlichen Schalten der elektrischen Energieversorgung angesteuert wird.

Durch Konfigurieren des zumindest einen zweiten Schaltsensors zum Ansteuern zumindest eines in einem Gebäudeinstallationsnetzwerk eingebundenen Aktors, kann von diesem Schaltsensor jeder beliebige, in das Netzwerk eingebundene Aktor angesteuert werden. Dieser zumindest eine zweite Schaltsensor kann, da dieser lediglich zum Auslösen eines vorkonfigurierten Befehls dient, nicht nur einfach in seinem Aufbau gehalten sein, sondern ist überdies intuitiv wie bei einem gewöhnlichen Wandschalter bedienbar. Bei diesem Konzept macht man sich zunutze, dass ein Nutzer die sich ihm bei einem menügeführten Bedienpaneel ergebenden Einstellmöglichkeiten oftmals nicht mit der möglichen Diversität nutzt, sondern immer wieder auf dieselben Einstellungen zurückgreift. Dieses lässt sich mit dem erfindungsgemäßen Bediengerät durch Ablegen dieser gewünschten Aktoransteuerung in Form jeweils eines Befehls oder eines aus mehreren Einzelbefehlen bestehenden Befehls (einer Befehlskette), abgelegt in dem dem Bediengerät zugehörigen Speicher, einrichten. Der Nutzer greift anschließend durch Betätigung des zumindest einen zweiten manuell betätigbaren Schaltsensors auf diesen oder diese vorkonfigurierten Befehle zurück. Ist einem Betätigungsevent eine Befehlskette zugeordnet, durch die mehrere Aktoren, beispielsweise die Raumbeleuchtung, Jalousien, Netzwerklautsprecher zum Abspielen von Musik und dergleichen angesteuert werden, kann durch simple Betätigung des zweiten Schaltsensors ein bestimmtes Ambiente eingestellt werden.

Der Speicher ist in mehrere Speichersegmente bzw. Speicherbereiche unterteilt, wobei jedem Speicherbereich ein mögliches Betätigungsevent jedes Schaltsensors der zweiten Schaltsensorengruppe zugeordnet ist.

Bei dem Gebäudeinstallationsnetzwerk als Teil des Hausautomatisierungssystems kann es sich beispielsweise um ein IP-Netzwerk handeln. Ein solches IP-Netzwerk ist in vielen Gebäuden, beispielsweise als WLAN bereits vorhanden, sodass dieses genutzt werden kann. Als Gebäudeinstallationsnetzwerk kann auch ein eigenes, proprietäres Netz eingerichtet und verwendet werden, in den das Bediengerät mit seinem zumindest einen zweiten Schaltsensor bzw. mit seiner zweiten Schaltsensorengruppe eingebunden ist.

Bevorzugt ist das Bediengerät modular konzipiert und umfasst einen Einsatz und einen Aufsatz. Der Einsatz ist typischerweise in einen Unterputzträger eingesetzt. Dieser Einsatz ist in die elektrische Energieversorgung der gebäudetechnischen Installation eingeschaltet und umfasst das Schaltorgan zum Schalten der gebäudetechnischen Installation, beispielsweise einer Leuchte. Die weiteren vorbeschriebenen Komponenten des Bediengerätes sind in dem Aufsatz enthalten. Dieser ist mit dem Einsatz in an sich bekannter Weise mechanisch und elektrisch verbunden. Bei einer solchen Ausgestaltung schaltet der zumindest eine manuell betätigbare erste Schaltsensor die elektrische Energieversorgung der zu schaltenden gebäudetechnischen Installation nicht unmittelbar. Vielmehr ist als Schaltorgan zu diesem Zweck in dem Einsatz ein Relais verbaut. Dieses eröffnet die Möglichkeit, einen mittels eines Einsatzes und eines darauf montierten Aufsatzes realisierten herkömmlichen Wandschalter durch Austausch des Aufsatzes umzurüsten, damit dieser nach der Umrüstung neben dem zumindest einen manuell betätigbaren ersten Schaltsensor auch zumindest einen manuell betätigbaren zweiten Schaltsensor für die Ansteuerung eines über das Gebäudeinstallationsnetzwerk erreichbaren Aktors aufweist.

Das Bediengerät ist in das Gebäudeinstallationsnetzwerk eingebunden. Das Funkmodul des Bediengerätes ist ein Netzwerkfunkmodul und in das Gebäudeinstallationsnetzwerk eingebunden. In der Ausgestaltung, in der das Gebäudeinstallationsnetzwerk ein IP-Netzwerk ist, ist das Funkmodul WLAN-fähig. Bei dieser Ausgestaltung, bei der das Bediengerät mit seinem Funkmodul selbst Teilnehmer des Gebäudeinstallationsnetzwerkes ist, sind in dem Speicher des Bediengerätes die die in dem Gebäudeinstallationsnetzwerk eingebundenen Aktoren ansteuernden Befehle hinterlegt. Diese Befehle können auch Direktbefehle sein, mithin Befehle, die die Aktoren direkt ansteuern. Entsprechend dem Betätigungsevent des zumindest einen manuell ansteuerbaren zweiten Schaltsensors wird der diesem Betätigungsevent zugeordnete Befehl zur Ansteuerung des zumindest einen gewünschten Aktors gesendet.

Eine vorteilhafte Ausgestaltung des Bediengerätes beinhaltet, dass der Aktor über API-Befehle (Application Programming Interface-Befehle) ansteuerbar ist und diese Befehle in dem Speicher des Bediengerätes abgelegt sind. Beispielsweise können dies http-API-Befehle sein. API-Befehle werden von den Herstellern der Aktoren zur Verfügung gestellt. Ermöglicht wird diese Vorgehensweise durch die bereits vorbeschriebene Vorkonfiguration des oder der in dem Speicher abgelegten Befehle. Eine Möglichkeit, ein solches API auszugestalten, wäre in Form eines RESTful Interfaces (Representational State Transfer) mithilfe des Hypertext Transfer Protocols (http) und dessen Befehle (Get, Put, Post, Delete etc.).

Das Bediengerät kann auch dergestalt eingerichtet sein, dass die von dem zumindest einen manuell betätigbaren ersten Schaltsensor geschaltete gebäudetechnische Installation, beispielsweise eine Leuchte, auch von dem zumindest einen manuell betätigbaren zweiten Schaltsensor angesteuert werden kann. Dieses ist mitunter gewünscht, wenn die durch einen manuell betätigbaren ersten Schaltsensor geschaltete gebäudetechnische Installation in eine bestimmte Szene (Ambiente) zusammen mit anderen Aktoren mit eingebunden werden soll. Bei einer solchen Ausgestaltung ist das Funkmodul als Steuergerät an das die gebäudetechnische Installation schaltende Schaltorgan angeschlossen, um dieses zu schalten und ggfs. bis in eine bestimmte Stellung, beispielsweise eine Dimmstellung zu bringen. Dieses erlaubt auch eine Ansteuerung des ansonsten nur über einen manuell betätigbaren ersten Schaltsensor zu schaltende gebäudetechnische Installation durch ein anderes, in das Gebäudeinstallationsnetzwerk integriertes Bediengerät, welches sich beispielsweise benachbart zu einer anderen Tür des Raumes, in dem sich das vorbeschriebene Bediengerät befindet, installiert ist.

Die Stromversorgung des Bediengerätes erlaubt im Unterschied zu batteriebetriebenen Bediengeräten den Einsatz von Komponenten, die auch einen etwas höheren Stromverbrauch haben, wie beispielsweise ein für diese Zwecke dann notwendiges bidirektional arbeitendes Funkmodul. Kann durch die typischerweise im Steuermodul integrierte Steuereinheit von einem manuell betätigbaren zweiten Schaltsensor auch die von dem manuell betätigbaren ersten Schaltsensor geschaltete gebäudetechnische Installation angesteuert werden, kann eine Priorisierung der Ansteuerung dieser gebäudetechnischen Installation durch die dem zumindest einen manuell betätigbaren zweiten Schaltsensor zugehörige Steuereinheit vorgenommen werden.

In einer Weiterbildung eines solchen Bediengerätes werden nicht nur die Betätigungsevents des zumindest einen manuell betätigbaren zweiten Schaltsensors ausgewertet, sondern auch diejenigen des zumindest einen manuell betätigbaren ersten Schaltsensors, wenn Letzterer das die gebäudetechnische Installation schaltende Schaltorgan nicht unmittelbar schaltet, sondern dieses über eine Steuereinheit ansteuert, wie dieses etwa bei einem Relais oder einem Dimmer als Schaltorgan der Fall ist. Hierdurch ist die Zahl der Betätigungsevents vergrößert. Folglich kann auch eine größere Anzahl unterschiedlicher Befehle in dem Speicher abgelegt sein. Beispielsweise kann eine gleichzeitige Betätigung einer bestimmten Anzahl oder auch aller Schaltsensoren des Bediengerätes als Betätigungsevent kodiert sein, um dieses etwa in einen Einrichtemodus zu schalten.

Gemäß einer möglichen Ausgestaltung ist das Bediengerät mit einer Basisstation, mit der verschiedene in einem Gebäudeinstallationsnetzwerk organisierte Aktoren, typischerweise eines Hausautomatisierungssystems angesteuert werden können, über eine Funkverbindung verbunden. Das Funkmodul des Bediengerätes kommuniziert bei dieser Ausgestaltung nur mit der Basisstation, muss mithin nicht in das Gebäudeinstallationsnetzwerk eingebunden sein. Die Basisstation istgenauso wie der durch das Bediengerät anzusteuernde Aktor - in das Gebäudeinstallationsnetzwerk eingebunden und kann in dieses Befehle senden und Befehle aus diesem empfangen. In diesem Falle wird über eine Kommunikation zwischen dem Bediengerät und der Basisstation der Direktbefehl von dem Bediengerät an die Basisstation übersandt, welche diesen Befehl nur in das Protokoll des Gebäudeinstallationsnetzwerkes umsetzen muss. Die den Aktor ansteuernde Information ist jedoch in dem Bediengerät hinterlegt.

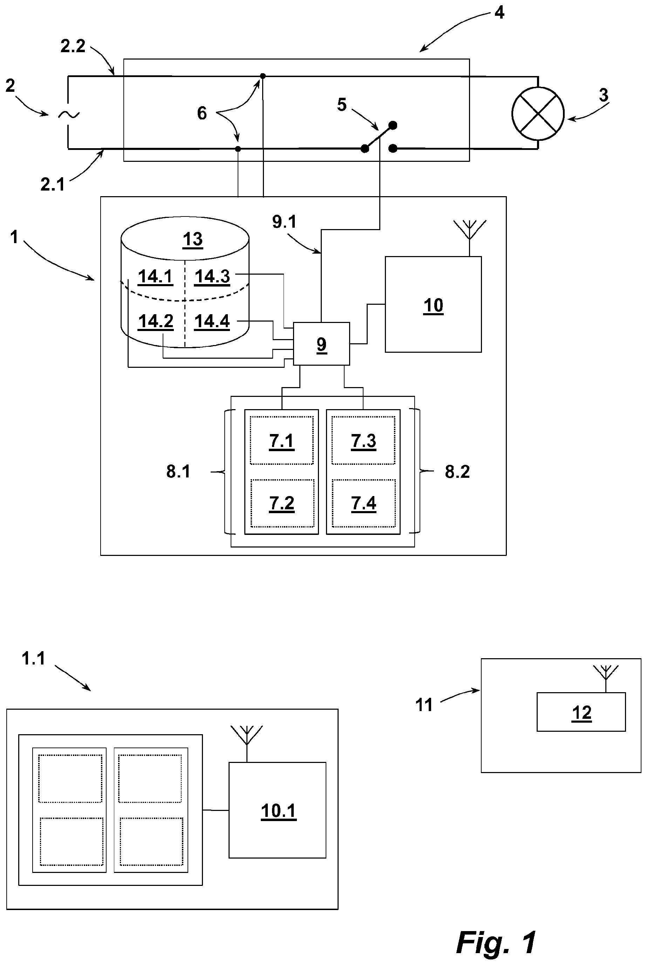

Die Erfindung wird nachstehend anhand eines Ausführungsbeispiels unter Bezugnahme auf die **Figur 1** erläutert. Figur 1 zeigt ein erfindungsgemäßes Bediengerät 1, angeschlossen an eine bei dem dargestellten Ausführungsbeispiel als Leuchte dargestellte gebäudetechnische Installation 3 und an eine elektrische Energieversorgung 2, das in ein in der Figur nicht näher dargestelltes Gebäudeinstallationsnetzwerk eingebunden ist.

Das Bediengerät 1 ist bei dem dargestellten Ausführungsbeispiel als Aufsatz zu einem die elektrische Energieversorgung 2 der gebäudetechnischen Installation 3 schaltenden Einsatz 4 konzipiert. Der Einsatz 4 umfasst ein Schaltorgan - einen Leistungsschalter -, der in die der gebäudetechnischen Installation 3 zugeführte Phase 2.1 der elektrischen Energieversorgung 2 eingeschaltet ist. Der dazugehörige Nullleiter ist mit dem Bezugszeichen 2.2 kenntlich gemacht. Mit dem Schaltorgan 5, welches bei dem dargestellten Ausführungsbeispiel als Relais ausgeführt ist, kann die gebäudetechnische Installation 3 ein- und ausgeschaltet werden. An die an den Einsatz 4 angeschlossene elektrische Energieversorgung 2 mit ihrer Phase 2.1 und ihrem Nullleiter 2.2 ist vor dem Schaltorgan 5 ein Stromanschluss 6 vorgesehen, über den das Bediengerät 1 stromversorgt ist. Die bei dem dargestellten Ausführungsbeispiel ein Netzteil umfassende Stromversorgung der in dem Bediengerät 1 enthaltenen und nachstehend näher erläuterten elektrischen Stromverbraucher ist in der Figur nicht im Einzelnen dargestellt.

In nicht näher dargestellter Art und Weise ist das als Aufsatz ausgelegte Bediengerät 1 elektrisch und mechanisch in an sich bekannter Weise mit dem Einsatz 4 verbunden.

Das Bediengerät 1 weist, je nach Auslegung, vier manuell durch vier Tasten oder zwei Wippen betätigbare Schaltsensoren 7.1, 7.2, 7.3, 7.4 auf. Zwei Schaltsensoren 7.1, 7.2 sind der manuell betätigbaren ersten Schaltsensorengruppe 8.1 zugehörig und zum Schalten der gebäudetechnischen Installation 3 vorgesehen. Diese beiden Schaltsensoren 7.1, 7.2 bilden somit bei diesem Ausführungsbeispiel die erste Schaltsensorengruppe 8.1. Des Weiteren umfasst das Bediengerät 1 eine Steuereinheit 9, an die die Schaltsensoren 7.1, 7.2 der ersten Schaltsensorengruppe 8.1 angeschlossen sind. Mit der Steuereinheit 9 kann das Schaltorgan 5 zum Schalten der gebäudetechnischen Installation 3 über eine Ansteuerleitung 9.1 angesteuert werden. In Abhängigkeit von der Auswertung der Betätigungsevents der Schaltsensoren 7.1, 7.2 wird die beispielhaft als Leuchte dargestellte gebäudetechnische Installation 3 ein- oder ausgeschaltet. Dabei dient der Schaltsensor 7.1 zum Einschalten der gebäudetechnischen Installation 3 und der Schaltsensor 7.2 zum Ausschalten derselben. Die gebäudetechnische Installation 3 wird somit mit diesen Schaltsensoren 7.1, 7.2 in konventioneller, einem Nutzer wohl bekannter Weise geschaltet. Die Betätigung der beiden Schaltsensoren 7.1, 7.2 kann, je nach Auslegung des Bediengerätes 1, entweder über zwei Tasten oder über eine Wippe erfolgen.

Integriert in das Bedienteil 1 ist des weiteren ein Funkmodul 10. Über das Funkmodul 10 ist das Bediengerät 1 in ein im Übrigen nicht näher dargestelltes Gebäudeinstallationsnetzwerk eingebunden. Somit handelt es sich bei dem Funkmodul 10 um ein Netzwerkfunkmodul. Eingebunden ist in das Gebäudeinstallationsnetzwerk beispielhaft eine weitere gebäudetechnischen Installation 11, die ebenfalls mit einem für die Kommunikation innerhalb des Gebäudeinstallationsnetzwerkes eingebundenen Funkmodul 12 ausgerüstet ist. Bei der gebäudetechnischen Installation 11 kann es sich beispielsweise um eine Jalousie mit einem Jalousieaktor handeln. Das Gebäudeinstallationsnetzwerk ist bei dem dargestellten Ausführungsbeispiel ein IP-Netzwerk. Jedem Netzwerkteilnehmer ist eine eindeutige Adresse zugeordnet ist. Die gebäudetechnische Installation 11 ist über sein Funkmodul 12 mit API-Befehlen (Application Programming Interface-Befehle) ansteuerbar.

Neben den beiden Schaltsensoren 7.1, 7.2 der manuell betätigbaren ersten Schaltsensorengruppe 8.1 verfügt das Bediengerät 1 über zwei weitere Schaltsensoren 7.3, 7.4. der zweiten Schaltsensorengruppe 8.2. Diese beiden manuell betätigbaren zweiten Schaltsensoren 7.3, 7.4 der Schaltsensorengruppe 8.2 dienen zum Ansteuern beliebiger, in das Gebäudeinstallationsnetzwerk eingebundener Aktoren, beispielsweise gebäudetechnischer Installationen oder auch anderer Geräte (Aktoren), wie eine Musikanlage bzw. netzwerkfähige Lautsprecher zur Wiedergabe von Musikeine Kaffeemaschine oder dergleichen. Zum Ansteuern eines solchen, in dem Gebäudeinstallationssystem befindlichen Aktors, wie beispielsweise der gebäudetechnischen Installation 11 dient das Funkmodul 10, über das bei entsprechender Betätigung einer der zweiten Schaltsensoren 7.3, 7.4 der zweiten Schaltsensorengruppe 8.2 ein Befehl zum Ansteuern des Aktors gesendet wird. Diese Befehle sind in einem Speicher 13 als Teil des Bediengerätes 1 vorkonfiguriert abgelegt. Zu diesem Zweck ist der Speicher 13 in mehrere, bei dem dargestellten Ausführungsbeispiel in vier Speicherbereiche 14.1, 14.2, 14.3, 14.4 unterteilt. In diesen Speicherbereichen 14.1, 14.2, 14.3, 14.4 sind Befehle in Form von API-Befehlen zum Ansteuern der gebäudetechnischen Installation 11 hinterlegt. Da die gebäudetechnische Installation 11 bei dem dargestellten Ausführungsbeispiel durch die von dem Bediengerät 1 gesendeten Befehle unmittelbar angesteuert wird, können diese Befehle auch Ansteuerbefehle genannt werden.

Jedem Speicherbereich 14.1, 14.2, 14.3, 14.4 ist dabei ein durch die Steuereinheit 9 erkennbares Betätigungsevent der beiden Schaltsensoren 7.3, 7.4 der zweiten Schaltsensorengruppe 8.2 zugeordnet. Erkennbar ist für die Steuereinheit 9 nicht nur das prinzipielle Betätigen der beiden Schaltsensoren 7.3, 7.4 der zweiten Schaltsensorengruppe 8.2, sondern auch das Betätigungsintervall. Durch die Steuereinheit 9 kann so zwischen einer Kurzdruck-Betätigung und einer Langdruck-Betätigung unterschieden werden. Bei einem Betätigen der Schaltsensoren 7.3, 7.4 der zweiten Schaltsensorengruppe 8.2 erkennt die Steuereinheit 9 das entsprechende Betätigungsevent, liest den diesem Betätigungsevent zugeordneten Speicherbereich 14.1, 14.2, 14.3, 14.4 aus und übergibt diesen Befehl an das Funkmodul 10, welches diesen Befehl in das Gebäudeinstallationsnetzwerk sendet. Die gebäudetechnischen Installation 11 empfängt diesen Befehl über sein Funkmodul 12 und führt die entsprechend befehligte Aktion aus.

Die gebäudetechnische Installation 11 ist bei dem dargestellten Ausführungsbeispiel so konzipiert, dass diese zueinander komplementäre Aktionen ausführen kann. Da es sich bei der gebäudetechnischen Installation 11 um eine Jalousie handelt, handelt es sich hierbei um das Herunterfahren und das Herauffahren. Zur intuitiven Ansteuerung der gebäudetechnischen Installation 11 ist dem Schaltsensor 7.3, der bei der Darstellung des Bediengerätes 1 in der Figur 1 der obere Schaltsensor 7.3 der zweiten Schaltsensorengruppe 8.2 ist, das Herauffahren zugeordnet, während dem anderen Schaltsensor 7.4 das Herunterfahren zugeordnet ist. Diese zueinander komplementären Befehle sind als Befehlspaar in dem Speicher 13 des Bediengerätes 1 in einem dem jeweiligen Betätigungsevent zugeordneten Speicherbereich 14.1, 14.2, 14.3, oder 14.4 abgelegt. Die beiden Schaltsensoren 7.3, 7.4 der manuell betätigbaren zweiten Schaltsensorengruppe 8.2 sind benachbart zu den beiden Schaltsensoren 7.1, 7.2 der manuell betätigbaren ersten Schaltsensorengruppe 8.1 angeordnet und ebenso wie Letztere mittels zweier Tasten oder einer Wippe zu betätigen. Die Verwendung zweier Tasten oder aber einer Wippe erfolgt je nach Auslegung des Bediengerätes 1. Eine Bedienung der als Jalousie bei dem dargestellten Ausführungsbeispiel ausgelegten gebäudetechnischen Installation 11 erfolgt somit ebenfalls intuitiv, und zwar anhand des oder der in dem Speicher 13 abgelegten, jeweils einem Betätigungsevent dieser Schaltsensoren 7.3, 7.4 der zweiten Schaltsensorengruppe 8.2 zugeordneten Befehle.

Die vorstehende Beschreibung des Bediengerätes 1 macht deutlich, dass beispielsweise durch Austausch eines vorhandenen, das Schaltorgan 5 ansteuernden Aufsatzes durch das als Aufsatz bei dem dargestellten Ausführungsbeispiel konzipierte Bediengerät 1 die Schaltfunktionalität aufgrund der Einbindung der beiden Schaltsensoren 7.3, 7.4 der zweiten Schaltsensorengruppe 8.2 von ein und derselben Stelle beliebige, in das Gebäudeinstallationsnetzwerk eingebundene Aktoren entsprechend der vorkonfigurierten Befehle angesteuert werden können.

Aufgrund der vorbeschriebenen Konzeption des Bediengerätes 1, bei dem auch die gebäudetechnische Installation 3 über die Steuereinheit 9 infolge einer Betätigung einer der Schaltsensoren 7.1, 7.2 der manuell betätigbaren ersten Schaltsensorengruppe 8.1 ansteuerbar ist, können auch diese Schaltsensoren 7.1, 7.2 mit unterschiedlichen Betätigungsevents belegt sein. Bei einer solchen Auslegung kann die Ansteuerung der gebäudetechnischen Installation 3 durch diese Schaltsensoren 7.1, 7.2 durch eine "Normalbetätigung" infolge einer Kurzdruck-Betätigung definiert sein. Ein anderes Betätigungsevent des Schaltsensors 7.1 und/oder 7.2 kann genutzt werden, um die Schaltfunktionalität des Bediengerätes 1 zu erhöhen, um beispielsweise bei Betätigen des Schaltsensors 7.1 mit einer Langdruckbetätigung nicht die gebäudetechnische Installation 3, sondern einen anderen, in das Gebäudeinstallationsnetzwerk eingebundenen Aktor anzusteuern. Bei Feststellen eines solchen Betätigungsevents des Schaltsensors 7.1 wird, wie dieses zu den beiden Schaltsensoren 7.3, 7.4 der zweiten Schaltsensorengruppe 8.2 bereits beschrieben ist, ein diesem Betätigungsevent zugeordneter, in dem Speicher 13 abgelegter Befehl über das Funkmodul 10 gesendet.

Bei dem dargestellten Ausführungsbeispiel ist das Funkmodul 10 des Bediengerätes 1 nicht nur dazu ausgebildet, Befehle zu senden, sondern auch um Befehle von einem in das Gebäudeinstallationsnetzwerk eingebundenen anderen Befehlsender zu empfangen. Ein solcher empfangener Befehl kann auch ein Ansteuerbefehl zum Ansteuern der gebäudetechnischen Installation 3 sein. Dieses eröffnet die Möglichkeit, die grundsätzlich nicht in das Gebäudeinstallationsnetzwerk integrierte gebäudetechnische Installation 3 ebenfalls über das Gebäudeinstallationsnetzwerk anzusteuern. Bei dem in der Figur 1 dargestellten Ausführungsbeispiel ist beispielhaft in das Gebäudeinstallationsnetzwerk ein zweites Bediengerät 1.1 eingebunden, welches aufgebaut ist wie das beschriebene Bediengerät 1, mit dessen Schaltsensoren 7.1, 7.2 der manuell betätigbaren ersten Schaltsensorengruppe 8.1 eine andere gebäudetechnische Installation geschaltet wird. Durch einen der beiden Schaltsensoren 7.3, 7.4 der manuell ansteuerbaren zweiten Schaltsensorengruppe 8.2 kann die gebäudetechnische Installation 3 durch Senden eines entsprechenden Ansteuerbefehls angesteuert werden, also beispielsweise ein- und ausgeschaltet werden.

Die Erfindung ist anhand eines Ausführungsbeispiels beschrieben worden. Ohne den Schutzbereich der geltenden Ansprüche zu verlassen, ergeben sich für einen Fachmann zahlreiche weitere Ausgestaltungen, die erfindungsgemäße Lehre zu verwirklichen, ohne dass dieses im Rahmen dieser Ausführungen im Einzelnen erläutert werden müsste.

### Bezugszeichenliste

- 1, 1.1: Bediengerät
- 2: Energieversorgung
- 2.1: Phase
- 2.2: Nullleiter
- 3: gebäudetechnische Installation
- 4: Einsatz
- 5: Schaltorgan
- 6: Stromanschluss
- 7.1, 7.2, 7.3, 7.4: Schaltsensor
- 8.1: erste Schaltsensorengruppe
- 8.2: zweite Schaltsensorengruppe
- 9: Steuereinheit
- 9.1: Ansteuerleitung
- 10,10.1: Funkmodul
- 11: gebäudetechnische Installation
- 12: Funkmodul
- 13: Speicher
- 14.1, 14.2, 14.3, 14.4: Speicherbereich

## Patentansprüche

1. Bediengerät (1, 1.1) für die Hausautomatisierung mit zumindest einem manuell betätigbaren ersten Schaltsensor (7.1, 7.2) und zumindest einem manuell betätigbaren zweiten Schaltsensor (7.3, 7.4), welcher wenigstens eine erste Schaltsensor (7.1, 7.2) zum Schalten einer gebäudetechnischen Installation (3) vorgesehen ist und bei installiertem Bediengerät (1) die elektrische Energieversorgung (2) der gebäudetechnischen Installation (3) schaltet, wobei der erste Schaltsensor (7.1, 7.2) mit seinem Schaltorgan (5) in die elektrische Energieversorgung (2) der zu schaltenden gebäudetechnischen Installation (3) eingeschaltet ist, wobei das Bediengerät (1, 1.1) zur Stromversorgung seiner elektrischen Verbraucher vor der von dem ersten Schaltsensor (7.1, 7.2) geschalteten elektrischen Energieversorgung (2) an diese angeschlossen ist, welches Bediengerät (1, 1.1) über ein Funkmodul (10, 10.1) sowie über einen elektronischen Speicher (13) verfügt, in dem zumindest ein Direktbefehl abgelegt ist, durch den ein in einem Gebäudeinstallationsnetzwerk eingebundener Aktor direkt ansteuerbar ist und durch welchen wenigstens einen zweiten Schaltsensor (7.3, 7.4) das Funkmodul (10, 10.1) zum Senden eines in dem Speicher (13) abgelegten Direktbefehls angesteuert ist.

2. Bediengerät nach Anspruch 1, **dadurch gekennzeichnet, dass** der den zumindest einen Aktor ansteuernde Befehl ein API-Befehl oder eine Folge von API-Befehlen ist.

3. Bediengerät nach einem der Ansprüche 1 oder 2, **dadurch gekennzeichnet, dass** durch dieses mehrere Aktoren ansteuerbar sind und zu deren Ansteuerung eine zumindest einen an jeden Aktor gerichteten Befehl umfassende Befehlskette gesendet wird.

4. Bediengerät nach einem der Ansprüche 1 bis 3, **dadurch gekennzeichnet, dass** in dem Speicher (13) für unterschiedliche Betätigungsevents unterschiedliche Befehle gespeichert sind.

5. Bediengerät nach einem der Ansprüche 1 bis 4, **dadurch gekennzeichnet, dass** das Bediengerät (1, 1.1) eine Steuereinheit (9) aufweist, durch die das Bediengerät (1, 1.1) über Befehle ansteuerbar ist und wobei die Steuereinheit (9) an das die gebäudetechnische Installation (3) schaltende Schaltorgan (5) angeschlossen ist, sodass die gebäudetechnische Installation (3) auch über empfangene Befehle schaltbar ist.

6. Bediengerät nach einem der Ansprüche 1 bis 5, **dadurch gekennzeichnet, dass** das Bediengerät (1, 1.1) mehrere manuell betätigbare, einer ersten Schaltsensorengruppe (8.1) zugeordnete Schaltsensoren (7.1, 7.2) und/oder mehrere manuell betätigbare, einer zweiten Schaltsensorengruppe (8.2) zugehörige Schaltsensoren (7.3, 7.4) aufweist.

7. Bediengerät nach einem der Ansprüche 1 bis 6, **dadurch gekennzeichnet, dass** in dem Speicher (13) des Bediengerätes (1, 1.1) zu zumindest zwei Schaltsensoren (7.3, 7.4) der zweiten Schaltsensorengruppe (8.2) jeweils ein einen Aktor komplementär ansteuernde Befehle abgelegt sind.

8. Bediengerät nach einem der Ansprüche 1 bis 7, **dadurch gekennzeichnet, dass** das Bediengerät (1, 1.1) ein Aufsatz zu einem Einsatz ist, welcher Einsatz das Schaltorgan (5) zum Schalten der gebäudetechnischen Installation (3) umfasst.
